(19) Europäisches Patentamt
European Patent Office
Office européen des brevets

(11) EP 0 818 040 B1

(12) **EUROPÄISCHE PATENTSCHRIFT**

(45) Veröffentlichungstag und Bekanntmachung des Hinweises auf die Patenterteilung:
**02.02.2000 Patentblatt 2000/05**

(21) Anmeldenummer: **96907496.2**

(22) Anmeldetag: **18.03.1996**

(51) Int Cl.[7]: **G11B 5/733**, G11B 5/708

(86) Internationale Anmeldenummer:
**PCT/EP96/01155**

(87) Internationale Veröffentlichungsnummer:
**WO 96/30900 (03.10.1996 Gazette 1996/44)**

(54) **MAGNETISCHE AUFZEICHNUNGSTRÄGER**

MAGNETIC RECORDING MEDIA

SUPPORT D'ENREGISTREMENT MAGNETIQUE

(84) Benannte Vertragsstaaten:
**DE FR GB IE IT LU NL PT SE**

(30) Priorität: **27.03.1995 DE 19511239**

(43) Veröffentlichungstag der Anmeldung:
**14.01.1998 Patentblatt 1998/03**

(73) Patentinhaber: **EMTEC Magnetics GmbH**
**67059 Ludwigshafen (DE)**

(72) Erfinder:
- **LEHNER, August**
  **D-67127 Rödersheim-Gronau (DE)**
- **JAKUSCH, Helmut**
  **D-67227 Frankenthal (DE)**
- **KOCH, Volker**
  **D-67271 Battenberg (DE)**
- **OHLINGER, Manfred**
  **D-67227 Frankenthal (DE)**
- **KOHL, Albert**
  **D-67229 Laumersheim (DE)**
- **LENZ, Werner**
  **D-67098 Bad Dürkheim (DE)**
- **SCHNEIDER, Norbert**
  **D-67122 Altrip (DE)**
- **HEILMANN, Peter**
  **D-67098 Bad Dürkheim (DE)**
- **VEITCH, Ronald, John**
  **D-67133 Maxdorf (DE)**
- **HOFFMANN, Erich**
  **D-69126 Heidelberg (DE)**
- **HÜBNER, Werner**
  **D-67227 Frankenthal (DE)**
- **JACHOW, Harald**
  **D-64625 Bensheim (DE)**
- **LEHNERT, Rudi**
  **D-67069 Ludwigshafen (DE)**

(74) Vertreter: **Kinzebach, Werner, Dr. et al**
**Patentanwälte**
**Reitstötter, Kinzebach und Partner**
**Postfach 86 06 49**
**81633 München (DE)**

(56) Entgegenhaltungen:
**EP-A- 0 582 472** **EP-A- 0 667 607**
**US-A- 4 729 922**

- **PATENT ABSTRACTS OF JAPAN vol. 008, no. 159 (P-289), 24.Juli 1984 & JP,A,59 056221 (FUJI SHASHIN FILM KK), 31.März 1984,**
- **PATENT ABSTRACTS OF JAPAN vol. 007, no. 023 (P-171), 29.Januar 1983 & JP,A,57 176532 (CANON KK), 29.Oktober 1982,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 818 040 B1

Printed by Jouve, 75001 PARIS (FR)

## Beschreibung

Die vorliegende Erfindung betrifft durch ein Stützpigment stabilisierte magnetische Aufzeichnungsträger.

Bei modernen magnetischen Aufzeichnungsträgern besteht andauernd der Wunsch nach größerer Speicherkapazität und nach schnelleren Zugriffszeiten zu den gespeicherten Informationen. Für die bandförmigen Aufzeichnungsträger bedeuten diese Anforderungen im ersten Fall einerseits eine stetige Reduzierung der Banddicke und andererseits - zumindest für das überwiegend praktizierte Längsaufzeichnungsverfahren - eine stetige Abnahme der Magnetschichtdicke. Im zweiten Fall resultieren beständig steigende Bandgeschwindigkeiten. Beispielsweise besitzen bandförmige Aufzeichnungsträger mit hoher Speicherkapazität heute nur noch 10 µm Banddicke bei einer für den Schreib- und Lesevorgang relevanten Magnetschichtdicke von ca. 1 µm, und die Bandgeschwindigkeit in modernen Hochleistungslaufwerken kann im Bereich von einigen Metern pro Sekunde liegen.

Besonders im sogenannten Start-Stop-Betrieb, wenn auf vorgewählte Informationspakete zugegriffen werden soll, können zum Teil hohe Beschleunigungen auf den magnetischen Aufzeichnungsträger in Längsrichtung einwirken. Damit verbunden ist eine dynamische Zugbelastung mit kurzzeitigen, hohen dynamischen Zugspannungswerten, die den Querschnitt des Bandes belasten. Dabei kann bereits eine plastische Deformation des bandförmigen Aufzeichnungsträgers erfolgen, die bei Dauerbeanspruchung mit zeitlich wiederkehrenden Lastwechseln zum Reißen führen kann.

Als Schichtträgermaterial für bandförmige Aufzeichnungsträger werden üblicherweise Polyesterfolien verwendet, beispielsweise aus Polyethylenterephthalat. Es ist bekannt, daß der Elastizitätsmodul dieses Materials 4 bis 8 GPa beträgt entsprechend den genauen Bedingungen des Herstellprozesses und daß die Elastizitätsgrenze bei maximal 0,5 % Dehnung liegt. Diese Werte werden im statischen Zugversuch an Folienproben gemessen, die in Maschinenrichtung der Folienherstellmaschine geschnitten und in eine geeignete Zugprüfmaschine eingespannt werden. Somit kann das Schichtträgermaterial selbst nur höchstens das Produkt dieser beiden Kennwerte, nämlich 40 MPa, auf elastische Weise als Zugspannung aufnehmen.

In der EP-A-0 520 155 wurde der Elastizitätsbereich von modernen Magnetschichten mit geringen Magnetschichten gleich oder kleiner als 1 µm durch eine Mindeststreckspannung von 30 MPa und durch eine Mindeststreckdehnung von 0,2 % charakterisiert. Die genannten elastischen Grenzwerte für den Schichtträger und die Magnetschicht ergaben für den daraus zusammengesetzten bandförmigen Aufzeichnungsträger einen elastischen Zugspannungswert von 30 bis 40 MPa bei einer elastischen Dehnung von 0,2 bis 0,5 %.

JP-A 57-078 630, JP-A 57-078 629 und JP-A 02-260 229 befassen sich ebenfalls mit der Elastizität von bandförmigen Aufzeichnungsträgern. Der Erfindungsgedanke der beiden ersten Schriften besteht darin, das Verhältnis der Elastizitätsmodule in Längs- und Querrichtung auf maximal 2,5 einzustellen, damit die magnetischen Aufzeichnungseigenschaften durch Deformation des Aufzeichnungsträgers nicht beeinträchtigt werden. Die JP-A 02-260 229 betrifft die Verbesserung der Lebensdauer der Magnetschicht und ihrer Laufeigenschaften. Dazu wird als Lösung eine weitere Magnetschicht als Unterschicht zwischen dem unmagnetischen Trägermaterial und der eigentlichen Aufzeichnungsschicht vorgeschlagen, wobei die Unterschicht einen höheren Elastizitätsmodul als die Aufzeichnungsschicht aufweist.

Die EP-A-0 582 472 beschreibt einen magnetischen Aufzeichnungsträger, der in einer nicht-magnetischen Unterschicht speziell beschichtete $\alpha$-$Fe_2O_3$ Partikel enthält.

Die JP-A-59 056 221 beschreibt ein magnetisches Aufzeichnungsmedium, das in einer Rückschicht orientierte Whisker-Partikel mit einem Verhältnis von Länge zu Durchmesser von mehr als 50 : 1 enthält.

Die US-A-4,729,922 schlägt zur Verbesserung der abrasiven Eigenschaften magnetischer Aufzeichnungsmaterialien die Verwendung von unmagnetischen $Cr_2O_3$-Partikeln in der Oberschicht vor.

Alle diese Veröffentlichungen ermöglichen nicht die Herstellungen von bandförmigen magnetischen Aufzeichnungsträgern mit befriedigend hohem elastischen Zugspannungsbereich und befriedigend hohem Elastizitätsmodul.

Die EP-A-0 667 607, welche nach Artikel 54 (3) EPÜ als Stand der Technik zu berücksichtigen ist, beschreibt einen magnetischen Aufzeichnungsträger, dessen magnetische Aufzeichnungsschicht orientierte nadelförmige $\gamma$-$Fe_2O_3$-Partikel mit einem Verhältnis von Länge zu Durchmesser von 7,5 : 1 enthält.

Der vorliegenden Erfindung lag daher die Aufgabe zugrunde, den genannten Nachteilen abzuhelfen und einen dauerelastischen bandförmigen magnetischen Aufzeichnungsträger für hohe, zeitlich veränderliche Zugspannungswerte in schnell laufenden Bandlaufwerken zur Verfügung zu stellen.

Demgemäß wurden bandförmige, magnetische Aufzeichnungsträger I mit einer zur magnetischen Informationsspeicherung geeigneten Schicht gefunden, umfassend einen unmagnetischen Träger III, mindestens eine auf diesem Träger aufgetragene Schicht und in mindestens einer dieser Schichten ein als Stützpigment geeignetes anorganisches nadelförmiges Pigment II mit einem Verhältnis der durchschnittlichen Länge zum mittleren durchschnittlichen Durchmesser des Pigments II von mindestens 3 : 1 bis 15 : 1, wobei der mittlere Elastizitätsmodul der genannten Schichten nicht weniger als 15 GPa in Längsrichtung des bandförmigen Aufzeichnungsträgers I beträgt, wobei, wenn das Stützpigment in der zur Informationsspeicherung geeigneten Schicht enthalten ist, kein $\gamma$-$Fe_2O_3$ als Stützpigment

verwendet wird.

Ferner wurden neue, als Stützpigmente geeignete chromhaltige anorganische nadelförmige Pigmente VI und VII, Verfahren zu ihrer Herstellung sowie die Verwendung der Pigmente zur, insbesondere anisotropen, Verstärkung polymerer Massen gefunden.

Unter dem Elastizitätsmodul versteht man erfindungsgemäß das Dehnelastizitäsmodul E, welches sich als das Verhältnis aus der Zugspannung zur Längsdehnung ergibt und in allgemein bekannter Weise leicht ermittelt werden kann.

Als Stützpigment kommen ferromagnetische und nicht-ferromagnetische anorganische nadelförmige Pigmente II in Betracht.

Geeignete ferromagnetische Pigmente II sind metallische Pigmente, wie Fe, Co, Ni und Legierungen dieser Elemente, und oxidische Pigmente, wie Co-haltiges $\gamma$-$Fe_2O_3$, $Fe_3O_4$, vorzugsweise chromhaltige oxidische Pigmente, wie $CrO_2$, und insbesondere solche der Formel VI

$$Cr^aO_x \,.\, n\, H_2O \qquad \text{VI}$$

mit

a: mittlere Wertigkeit des Chroms mit $3{,}0 < a \leq 3{,}25$

vorzugsweise mit $3{,}0 < a \leq 3{,}1$

x: die sich aus der Chrom-Wertigkeit ergebenden Sauerstoffäquivalente

n: Wassergehalt mit $0 < n < (4\text{-}a)/2$.

Die Pigmente VI können dabei erfindungsgemäß aus 50 Gew.-% eines Kerns und 50 Gew.-% einer Hülle aufgebaut sein, wobei die atomaren Verhältnisse zwischen Cr(IV) und Cr(III) in Kern und Hülle gleich oder unterschiedlich sein können.

Geeignete nicht-ferromagnetische Pigmente II sind vorzugsweise oxidische Pigmente,wie FeOOH, $\alpha$-$Fe_2O_3$ und insbesondere chromhaltige Pigmente der Formel VII

$$Cr_2O_3 \,.\, n\, H_2O \qquad \text{VII}$$

mit

n: 0 bis 0,5.

Die Pigmente VI und VII sind erhältlich durch Temperung von Pigmenten der Formel VIII

$$CrO_x \qquad \text{VIII}$$

mit

x: $1{,}8 \leq x \leq 2{,}2$

bei Temperaturen zwischen 400 und 500°C, vorzugsweise 440 bis 480°C, besonders vorteilhaft 450 bis 470°C, in einem insbesondere molekularen Sauerstoff enthaltenden Gas wie Luft, wodurch sich Reaktionszeiten von 0,5 bis 10, vorzugsweise 0,5 bis 2 Stunden ergeben, wobei die Pigmente VIII vor dem Tempern in an sich bekannter Weise, beispielsweise durch Waschen mit Wasser, gereinigt werden können.

Vorteilhaft können die Pigmente VIII vor der Temperung mit organischen, vorzugsweise anorganischen Verbindungen,wie Mineralbasen, vorteilhaft Alkalimetallhydroxide, Erdalkalimetallhydroxide und Erdmetallhydroxide, beispielsweise Kaliumhydroxid, Calciumhydroxid, insbesondere Natriumhydroxid, oder deren basischen Salze,beispielsweise Carbonate oder Sulfite, insbesondere Natriumsulfit, behandelt werden. Dabei empfiehlt sich eine Umsetzung in anorganischer, insbesondere wäßriger Lösung bei pH-werten von 7 bis 14, insbesondere 11 bis 13 ausgenommen

Sulfite, für die sich pH-Werte von 7 bis 9 empfehlen, bei Temperaturen von 10 bis 90°C mit Reaktionszeiten von 0,5 bis 10 Stunden, insbesondere 0,5 bis 5 Stunden.

Die Pigmente VI und VII können ebenfalls erhalten werden, indem man zunächst ein Pigment VIII unter hydrothermalen Bedingungen bei Temperaturen von 110°C bis 250°C, vorzugsweise 160°C bis 230°C, insbesondere 190°C bis 210°C, mit einem Reduktionsmittel bei Drukken von 2 bis 500 bar, vorzugsweise 100 bis 300 bar, insbesondere 150 bis 250 bar, innerhalb von 10 bis 500, vorzugsweise 50 bis 250, insbesondere 80 bis 120,Stunden umsetzt. Als Reduktionsmittel kommen anorganische, vorzugsweise organische Verbindungen, wie Carbonsäuren, insbesondere Oxalsäure, in Betracht.

Die Umsetzungsprodukte können in der Reaktionsmischung weiterverarbeitet oder vorteilhaft nach bekannten Verfahren, wie Filtration, aus der Suspension isoliert und vorzugsweise gereinigt, beispielsweise nachgewaschen, werden.

Anschließend werden die Umsetzungsprodukte bei Temperaturen zwischen 100 und 500°C, vorzugsweise 200 bis 400°C, in einem insbesondere molekularen Sauerstoff enthaltenden Gas,wie Luft,getempert, wodurch sich Reaktionszeiten von 0,5 bis 10, vorzugsweise 0,5 bis 2, Stunden ergeben.

Die Umsetzungsprodukte können vor der Temperung mit organischen, vorzugsweise anorganischen Verbindungen wie Mineralbasen, vorteilhaft Alkalimetallhydroxide, Erdalkalimetallhydroxide und Erdmetallhydroxide, beispielsweise Kaliumhydroxid, Calciumhydroxid, insbesondere Natriumhydroxid, oder deren basischen Salze beispielsweise Carbonate oder Sulfite, insbesondere Natriumsulfit, behandelt werden. Dabei empfiehlt sich eine Umsetzung in anorganischer, insbesondere wäßriger Lösung bei pH-Werten von 7 bis 14, insbesondere 11 bis 13 ausgenommen Sulfite, für die sich pH-Werte von 7 bis 9 empfehlen, bei Temperaturen von 10 bis 90°C mit Reaktionszeiten von 0,5 bis 10 Stunden, insbesondere 0,5 bis 5 Stunden.

Die Pigmente VI und VII können mit organischen, vorzugsweise anorganischen Verbindungen wie Mineralbasen, vorteilhaft Alkalimetallhydroxide, Erdalkalimetallhydroxide und Erdmetallhydroxide, beispielsweise Kaliumhydroxid, Calciumhydroxid, insbesondere Natriumhydroxid, oder deren basischen Salze beispielsweise Carbonate oder Sulfite, insbesondere Natriumsulfit, behandelt werden. Dabei empfiehlt sich eine Umsetzung in anorganischer, insbesondere wäßriger Lösung bei pH-Werten von 7 bis 14, insbesondere 11 bis 13 ausgenommen Sulfite, für die sich pH-Werte von 7 bis 9 empfehlen, bei Temperaturen von 10 bis 90°C mit Reaktionszeiten von 0,5 bis 10 Stunden, insbesondere 0,5 bis 5 Stunden.

Die Stützpigmente II, VI und VII können, wie allgemein bekannt ist, weitere chemische Elemente oder Verbindungen enthalten. Die nadelförmigen Pigmente II, VI und VII weisen erfindungsgemäß ein Verhältnis der durchschnittlichen Länge der Nadeln zum mittleren durchschnittlichen Durchmesser der Nadeln von 3:1 bis 15:1, vorzugsweise 5:1 bis 10:1 und eine Länge von 50 bis 400, vorzugsweise 90 bis 300 nm, insbesondere 100 bis 200 nm auf. Die spezifische Oberfläche nach DIN 66132 der Pigmente VI und VII sollte 30 bis 150, vorzugsweise 50 bis 100 $m^2/g$ betragen. Die Sättigungsmagnetisierung der Pigmente VI beträgt erfindungsgemäß 0,1 bis 65, vorzugsweise 0,1 bis 40, insbesondere 0,1 bis 22 $nTm^3/g$ und die Remanenz 0,05 bis 24, vorzugsweise 0,05 bis 12, insbesondere 0,05 bis 5 $nTm^3/g$.

Die Pigmente II, vorzugsweise VI und VII, eignen sich zur insbesondere anisotropen Verstärkung polymerer Massen. Solche polymere Hassen können vorteilhaft zur Beschichtung von Flächen, beispielsweise Folien, oder dreidimensionalen Körpern wie Zylindern, beispielsweise Drähten, verwendet werden.

Zur Herstellung derart verstärkter polymerer Massen oder Schichten arbeitet man Pigmente II, insbesondere VI oder VII, erfindungsgemäß in Schmelzen oder Lösungen polymerer Massen oder Schmelzen oder Lösungen von Verbindungen, aus denen man polymere Massen herstellen kann, ein und härtet anschließend die Mischungen aus oder läßt sie erstarren.

Zur anisotropen Verstärkung polymerer Massen, wie sie besonders vorteilhaft bei den erfindungsgemäßen magnetischen Aufzeichnungsträgern I angewandt werden kann, kann man die Stützpigmente II, insbesondere VI oder VII, vor dem Aushärten oder Erstarren der polymeren Massen orientieren.

Im Falle von nicht-ferromagnetischen Stutzpigmenten kann diese Ausrichtung beispielsweise durch rheologische Maßnahmen,wie Gießen der Mischung durch einen engen Spalt, erreicht werden. Bei ferromagnetischen Stützpigmenten II, insbesondere VI, kann eine Ausrichtung vorteilhaft mittels eines äußeren Magnetfeldes erfolgen.

In besonders vorteilhaften magnetischen Aufzeichnungsträgern, bei denen sich eine ein ferromagnetisches Stützpigment II enthaltende Schicht V zwischen einem Träger III und einer für die Informationsspeicherung geeigneten Schicht IV befindet, sollte der Richtfaktor in der Schicht V mindestens 2,5 und in der Schicht IV mindestens 4.0 betragen. Unter dem Richtfaktor wird dabei der Quotient aus der Remanenz des bandförmigen magnetischen Aufzeichnungsträgers in Laufrichtung durch die Remanenz des magnetischen Aufzeichnungsträgers senkrecht zu dieser Richtung verstanden. Die Orientierung der Pigmente II, vorzugsweise VI und VII, kann dabei an Ultradünnschnitten bestimmt werden. Dazu werden Ultradünnschnitte mit einer Stärke von 0,1 bis 0,2 µm mit einem Transmissionselektronenmikroskop bei mindestens 20.000facher Vergrößerung betrachtet. In einem Meßfeld von ca. 20 µm Breite werden je Ultradünnschnitt 50 bis 100 nadelförmige Pigmente statistisch ausgewählt und der mittlere durchschnittliche Durchmesser in Längsrichtung des Bandes ($d_L$) und in Querrichtung ($d_Q$) bestimmt. Die Pigmente gelten für den Fall

$$d_L \geq 2 \cdot d_Q$$

als überwiegend in Längsrichtung des Bandes orientiert.

Bandförmige magnetische Aufzeichnungsträger I enthalten bekanntermaßen einen unmagnetischen Träger III und mindestens eine für die magnetische Informationsspeicherung geeignete Schicht (Magnetschicht) IV.

Die erfindungsgemäßen magnetischen Aufzeichnungsträger I können die beschriebenen Stützpigmente II in dem unmagnetischen Träger III, in mindestens einer der für die Informationsspeicherung geeigneten Schichten IV oder in mindestens einer Schicht V enthalten. Die Schicht V kann dabei zwischen dem Träger III und einer Magnetschicht IV oder auf der einer Magnetschicht IV abgewandten Seite des Trägers III angeordnet sein.

Als unmagnetische Träger III lassen sich die üblichen starren oder flexiblen Trägermaterialien verwenden, insbesondere Folien aus linearen Polyestern wie Polyethylenterephthalat, die im allgemeinen Stärken von 4 bis 200 µm und insbesondere 6 bis 36 µm haben.

Die Magnetschicht IV der erfindungsgemäßen magnetischen Aufzeichnungsträger I kann sowohl auf aufgedampften oder gesputterten, metallischen Dünnfilmen, die im wesentlichen ferromagnetische Elemente, wie Pe, Co und Ni Oder ihren Legierungen enthalten, oder auf ferromagnetischen Pigmenten basieren.

Zur Herstellung solcher Schichten können die Pigmente gegebenenfalls mit Füllstoffen in an sich bekannter weise in einer Lösung aus einem Lösungsmittel, einem Bindemittel und weiteren Zusatzstoffen,wie einem Gleitmittel und einem Dispergiermittel, dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittel und, falls erforderlich, Aushärten des Bindemittels mit anschließendem Kalandrieren.

Als magnetische Pigmente kommen die üblichen oxidischen Pigmente, wie $\gamma$-$Fe_2O_3$, $Fe_3O_4$, und $CrO_2$, oder metallische Pigmente, wie Fe, Co und Ni, in Betracht. Diese Pigmente können, wie allgemein bekannt ist, weitere chemische Elemente oder Verbindungen enthalten.

Als Lösungsmittel können wie üblich Wasser, Ether,wie Tetrahydrofuran oder Dioxan, Ketone,wie Methylethylketon oder Cyclohexanon, Ester,wie Ethylacetat oder Kohlenwasserstoffe, wie Alkane oder Aromaten,oder Mischungen dieser Lösungsmittel eingesetzt werden.

Als Bindemittel kommen bekanntermaßen Polyacrylate, Polymethacrylate, Polyacrylamid, Vinylpolymere, wie Polystyrol, Polyvinylchlorid, Polyvinylacetat, Polyvinylpropionat oder Polyacrylnitril, cellulosehaltige Bindemittel, wie Celluloseester, insbesondere Cellulosenitrate, Celluloseacetat, Cellulosetriacetat, Celluloseacetopropionat oder Celluloseacetobutyrat, Phenoxyharze, Epoxyharze oder vorzugsweise Polyurethane sowie Block- oder Copolymerisate dieser Verbindungen in Betracht. Geeignete Polyurethane sind beispielsweise in DE-B 11 06 959, DE-B 27 53 694, DE-A 32 26 995, DE-A 32 27 163 und DE-A 32 27 164 beschrieben. Die Polyurethane können als alleinige Bindemittel oder vorzugsweise mit anderen Polymeren, wie Polyvinylformale, Phenoxyharzen, PVC oder PVC-Copolymerisate, verwendet werden.

Die Abriebfestigkeit und der Elastizitätsmodul der Polyurethane und Polyurethangemische können durch Vernetzung dieser Komponenten mit mehrwertigen Isocyanaten, insbesondere solchen mit mehr als 2 Isocyanatgruppen, weiter erhöht werden. Solche Vernetzer können vorteilhaft durch Addition von zweiwertigen Isocyanaten wie Toluylendiisocyanat, Hexamethylendiisocyanat oder Isophorondiisocyanat der Formel

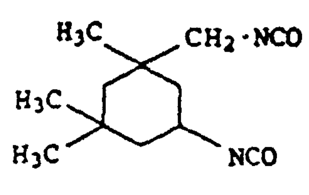

an mehrwertige Alkohole oder durch Biuret- oder Isocyanuratbildung erhalten werden. Als Vernetzer kommt dabei besonders ein Additionsprodukt von Toluylendiisocyanat an Trimethylolpropan und Diethylenglycol in Betracht. Die im Verhältnis zur eingesetzten Menge an Polyurethan zur Erzielung optimaler anwendungstechnischer Eigenschaften erforderliche Menge an Vernetzer kann dabei in einigen einfachen Vorversuchen leicht ermittelt werden.

Als Gleitmittel finden üblicherweise Carbonsäuren mit 10 bis 20 Kohlenstoffatomen, insbesondere Stearinsäure und Palmitinsäure, Derivate von Carbonsäuren, wie deren Salze, Ester und Amide oder fluorierte Kohlenwasserstoffe Anwendung.

Als Dispergiermittel können in üblicher Weise kationische, nichtionische oder vorzugsweise anionische Tenside verwendet werden, wie Carboxylate, Sulfonate, Phosphonate oder Phosphate von Kohlenwasserstoffen, insbesondere Alkyl- oder Arylverbindungen.

Als Füllstoffe kommen bekanntermaßen anorganische und organische Pigmente in Betracht, z.B. Aluminiumoxid, Siliziumdioxid, Ruß, Polyethylen und Polypropylen.

Bei der Herstellung magnetischer Aufzeichnungsträger I können mehrere Magnetschichten IV, von denen mindestens eine Schicht ein Stützpigment II enthält, oder mehrere Schichten V, von denen mindestens eine Schicht ein Stützpigment II enthält, auf das Trägermaterial III aufgebracht werden.

Beispiele

Herstellung eines $CrO_2$-Pigmentes

Beispiel 1

In 159 g Wasser wurden innerhalb von 10 Minuten 554 g $CrO_3$ dispergiert. Zu der Mischung wurden bei 40-60°C 70g Kaliumantimonyltartrat (KAT) langsam zugegeben und 5 Minuten bei 60°C nachgerührt. Anschließend wurden bei 20-30°C innerhalb von 3 Minuten unter Rühren 170 g $Cr_2O_3$ zugegeben.

Dann wurde 15 Minuten unter intensivem Rühren homogenisiert, wobei die Temperatur auf 80°C stieg.

Nach dem Abkühlen auf 30°C wurde das Gemisch in einem Autoklaven in 3 Stunden auf 320-350°C aufgeheizt und 9 Stunden bei dieser Temperatur gehalten, wobei der Druck maximal 360 bar betrug. Anschließend wurde die Mischung abgekühlt, wobei bei Autoklav bei einer Temperatur der Mischung von 200°C entspannt wurde.

Das Produkt wurde dann bei 50°C getrocknet und gemahlen.

Die Eigenschaften sind aus Tabelle 1 ersichtlich.

Beispiel 2a-g

In einer Mischung von 780 g Oxalsäure in 1490 g Wasser wurden 1000 g des Produktes aus Beispiel 1 unter Rühren bei 25°C suspendiert. Anschließend wurde das Gemisch in einem Autoklaven 96 Stunden bei 210°C unter dem sich einstellenden Eigendruck der Mischung gehalten.

Anschließend wurde das Produkt unter den in Tabelle 2 genannten Verfahrensbedingungen in Luft getempert.

Die Eigenschaften sind aus Tabelle 2 ersichtlich.

Beispiel 3

100 g des Produktes aus Beispiel 1 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 µS betrug, und dann der Rückstand in 1000 g Wasser dispergiert.

Dann wurde zu dem Gemisch eine Lösung von 11 g Natriumsulfit in 50 g Wasser gegeben und 30 Minuten bei 20 bis 28°C gerührt.

Das Produkt wurde anschließend abfiltriert und der Filterkuchen solange gewaschen, bis das Waschwasser eine Leitfähigkeit bei 20°C < 50 µS zeigte.

Der Filterkuchen wurde bei 50°C getrocknet und auf eine Pelletgröße < 1mm granuliert.

Die Eigenschaften sind aus Tabelle 1 ersichtlich.

Beispiel 4

100 g des Produktes aus Beispiel 1 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 µS betrug, und dann der Rückstand in 1000 g Wasser dispergiert.

Dann wurde mit 15 Gew.-%iger wäßriger Natronlauge ein pH-Wert von 12 eingestellt und 2 Stunden bei 55°C und pH 12 nachgerührt.

Das Produkt wurde anschließend abfiltriert und der Filterkuchen solange gewaschen, bis das Waschwasser eine Leitfähigkeit bei 20°C < 50 µS zeigte.

Der Filterkuchen wurde bei 50°C getrocknet und auf eine Pelletgröße < 1 mm granuliert.

Die Eigenschaften sind aus Tahelle 1 ersichtlich.

Beispiel 5

100 g des Produktes aus Beispiel 1 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 µS betrug, und dann der Rückstand in 1000 g Wasser dispergiert.
Unter Rühren und Stickstoffabdeckung wurde die Mischung auf 85°C aufgeheizt, bei 85°C eine Lösung von 20 g Natriumsulfit in 100 g Wasser zugegeben und 2 Stunden bei 85°C nachgerührt.
Das Produkt wurde anschließend abfiltriert und der Filterkuchen solange gewaschen, bis das Waschwasser eine Leitfähigkeit bei 20°C < 50 µS zeigte.
Der Filterkuchen wurde bei 50°C getrocknet und auf eine Pelletgröße < 1 mm granuliert.
Die Eigenschaften sind aus Tabelle 1 ersichtlich.

Beispiel 6

100 g des Produktes aus Beispiel 1 wurden in 1000 g Wasser dispergiert und naßgemahlen. Anschließend wurde die Mischung abfiltiert und der Filterkuchen mit Wasser solange gewaschen, bis die Leitfähigkeit des Waschwassers bei 20°C < 50 µS betrug, bei 50°C getrocknet und auf eine Pelletgröße < 1 mm granuliert.
Das Produkt wurde im Drehrohrofen bei einer Verweilzeit von 30 Minuten bei 460°C unter Luftatmosphäre getempert.
Die Eigenschaften sind aus Tabelle 1 ersichtlich.

Beispiel 7

100 g des Produktes aus Beispiel 6 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 µS betrug, und dann der Rückstand in 1000 g Wasser dispergiert.
Dann wurde mit 15 Gew.-%iger wäßriger Natronlauge ein pH-Wert von 12 eingestellt und 2 Stunden bei 55°C und pH 12 nachgerührt.
Das Produkt wurde anschließend abfiltriert und der Filterkuchen solange gewaschen, bis das waschwasser eine Leitfähigkeit bei 20°C < 50 µS zeigte.
Der Filterkuchen wurde bei 50°C getrocknet und auf eine Pelletgröße < 1 mm granuliert.
Die Eigenschaften sind aus Tabelle 1 ersichtlich.

Herstellung eines magnetischen Aufzeichnungsträgers

Beispiel 8

Auf einen 14 µm dicken unmagnetischen Schichtträger aus Polyethylenterephthalat wurde eine erste Dispersion aus 1000 Gewichtsteilen Chromoxid-Pigment gemäß Beispiel 5, 75 Gewichtsteilen eines Vinylpolymeren mit polaren Ankergruppen, 95 Gewichtsteilen eines Polyurethans mit polaren Ankergruppen, 25 Gewichtsteilen Stearinsäure, 180 Gewichtsteilen Tetrahydrofuran und 180 Gewichtsteilen Dioxan in einer Schichtdicke von 1,2 µm aufgetragen. Auf diese Schicht wurde eine zweite Dispersion aus 1000 Gewichtsteilen eines ferromagnetischen Metallpigmentes mit einer Koezitivkraft von 133 kA/m und einer spezifischen Oberfläche von 52 $m^2$/g, 80 Gewichtsteilen $\alpha$-$Al_2O_3$ mit einer TeilchenGröße von 0,2 µm, 77 Gewichtsteilen eines Vinylpolymeren mit polaren Ankergruppen, 77 Gewichtsteilen eines Polyurethans mit polaren Ankergruppen, 10 Gewichtsteilen eines Phosphorsäureesters, 25 Gewichtsteilen Stearinsäure, 22,5 Gewichtsteilen eines Polyisocyanats, 1837,5 Gewichtsteilen Tetrahydrofuran und 1837,5 Gewichtsteilen Dioxan in einer Schichtdicke von 0,4 µm aufgetragen, mit einem magnetischen Richtfeld orientiert, getrocknet und kalandriert.
Es wurde ein erfindungsgemäßer magnetischer Aufzeichnungsträger mit sehr guten magnetischen und mechanischen Eigenschaften erhalten.

Beispiel 9

Es wurde wie in Beispiel 8 verfahren, jedoch enthielt die erste Dispersion anstelle der 1000 Gewichtsteile Chromoxid-Pigment nach Beispiel 5 1000 Gewichtsteile Chromoxid-Pigment nach Beispiel 7.
Es wurde ein erfindungsgemäßer magnetischer Aufzeichnungsträger mit hervorragenden magnetischen und mechanischen Eigenschaften erhalten.

Beispiel 10

Es wurde wie in Beispiel 8 verfahren, jedoch enthielt die erste Dispersion anstelle der 1000 Gewichtsteile Chromoxid-Pigment 1000 Gewichtsteile $\alpha$-$Fe_2O_3$-Pigmente mit einer durchschnittlichen Nadellänge von 125 nm und einem mittleren durchschnittlichen Nadeldurchmesser von 25 nm.
Es wurde ein erfindungsgemäßer magnetischer Aufzeichnungsträger mit guten magnetischen und mechanischen Eigenschaften erhalten.

Vergleichsbeispiel

Es wurde wie in 3eispiel 8 verfahren, jedoch enthielt die erste Dispersion anstelle der 1000 Gewichtsteile Chromoxid-Pigment 1000 Gewichtsteile $TiO_2$-Pigment mit einer durchschnittlichen Länge von 60 nm und einem mittleren durchschnittlichen Durchmesser von 30 nm.
Die Schichten des magnetischen Aufzeichungsträgers wiesen einen Elastizitätsmodul von 13 GPa auf.

Tabelle 1

| | Bsp. 1 | Bsp. 3 | Bsp. 4 | Bsp. 5 | Bsp. 6 | Bsp. 7 |
|---|---|---|---|---|---|---|
| Länge [nm] | 130 | 130 | 130 | 130 | 130 | 130 |
| Länge/Dicke | 7 | 7 | 7 | 7 | | 7 |
| SSA [$m^2$/g] | 73 | 73 | 73 | 73 | 64 | 64 |
| Hc [kA/m] | 15 | 15 | 16 | 15 | 0 | 0 |
| $\sigma_r$ [$nTm^3$/g] | 21 | 16 | 17 | 13 | 1 | 1 |
| $\sigma_m$ [$nTm^3$/g] | 77 | 59 | 64 | 49 | 6 | 5 |

Tabelle 2

| Beispiel | Temperung | Hc [kA/m] | $\sigma_r$ [$nTm^3$/g] | $\sigma_m$ [$nTm^3$/g] | SSA [$m^2$/g] |
|---|---|---|---|---|---|
| 2a | ungetempert | 0 | 0 | 1 | 76 |
| 2b | 1h/250°C | 7 | 1 | 5 | 74,6 |
| 2c | 1h/300°C | 17 | 3 | 14 | 73,6 |
| 2d | 1h/350°C | 19 | 11 | 39 | 71,2 |
| 2e | 1h/400°C | 10 | 7 | 33 | 71,5 |
| 2f | 1h/450°C | 3,3 | 2 | 18 | 68,8 |
| 2g | 1h/500°C | 6,2 | ≤ 1 | 7 | 62,8 |

Beschreibung

Die vorliegende Erfindung betrifft durch ein Stützpigment stabilisierte magnetische Aufzeichnungsträger.
Bei modernen magnetischen Aufzeichnungsträgern besteht andauernd der Wunsch nach größerer Speicherkapazität und nach schnelleren Zugriffszeiten zu den gespeicherten Informationen. Für die bandförmigen Aufzeichnungsträger bedeuten diese Anforderungen im ersten Fall einerseits eine stetige Reduzierung der Banddicke und andererseits - zumindest für das überwiegend praktizierte Längsaufzeichnungsverfahren - eine stetige Abnahme der Magnetschichtdicke. Im zweiten Fall resultieren beständig steigende Bandgeschwindigkeiten. Beispielsweise besitzen bandförmige Aufzeichnungsträger mit hoher Speicherkapazität heute nur noch 10 µm Banddicke bei einer für den Schreib- und Lesevorgang relevanten Magnetschichtdicke von ca. 1 µm, und die Bandgeschwindigkeit in modernen Hochleistungslaufwerken kann im Bereich von einigen Metern pro Sekunde liegen.
Besonders im sogenannten Start-Stop-Betrieb, wenn auf vorgewählte Informationspakete zugegriffen werden soll, können zum Teil hohe Beschleunigungen auf den magnetischen Aufzeichnungsträger in Längsrichtung einwirken. Damit verbunden ist eine dynamische Zugbelastung mit kurzzeitigen, hohen dynamischen Zugspannungswerten, die den Querschnitt des Bandes belasten. Dabei kann bereits eine plastische Deformation des bandförmigen Aufzeichnungsträgers erfolgen, die bei Dauerbeanspruchung mit zeitlich wiederkehrenden Lastwechseln zum Reißen führen

kann.

Als Schichtträgermaterial für bandförmige Aufzeichnungsträger werden üblicherweise Polyesterfolien verwendet, beispielsweise aus Polyethylenterephthalat. Es ist bekannt, daß der Elastizitätsmodul dieses Materials 4 bis 8 GPa beträgt entsprechend den genauen Bedingungen des Herstellprozesses und daß die Elastizitätsgrenze bei maximal 0,5 % Dehnung liegt. Diese Werte werden im statischen Zugversuch an Folienproben gemessen, die in Maschinenrichtung der Folienherstellmaschine geschnitten und in eine geeignete Zugprüfmaschine eingespannt werden. Somit kann das Schichtträgermaterial selbst nur höchstens das Produkt dieser beiden Kennwerte, nämlich 40 MPa, auf elastische Weise als Zugspannung aufnehmen.

In der EP-A-0 520 155 wurde der Elastizitätsbereich von modernen Magnetschichten mit geringen Magnetschichten gleich oder kleiner als 1 µm durch eine Mindeststreckspannung von 30 MPa und durch eine Mindeststreckdehnung von 0,2 % charakterisiert. Die genannten elastischen Grenzwerte für den Schichtträger und die Magnetschicht ergaben für den daraus zusammengesetzten bandförmigen Aufzeichnungsträger einen elastischen Zugspannungswert von 30 bis 40 MPa bei einer elastischen Dehnung von 0,2 bis 0,5 %.

JP-A 57-078 630, JP-A 57-078 629 und JP-A 02-260 229 befassen sich ebenfalls mit der Elastizität von bandförmigen Aufzeichnungsträgern. Der Erfindungsgedanke der beiden ersten Schriften besteht darin, das Verhältnis der Elastizitätsmodule in Längs- und Querrichtung auf maximal 2,5 einzustellen, damit die magnetischen Aufzeichnungseigenschaften durch Deformation des Aufzeichnungsträgers nicht beeinträchtigt werden. Die JP-A 02-260 229 betrifft die Verbesserung der Lebensdauer der Magnetschicht und ihrer Laufeigenschaften. Dazu wird als Lösung eine weitere Magnetschicht als Unterschicht zwischen dem unmagnetischen Trägermaterial und der eigentlichen Aufzeichnungsschicht vorgeschlagen, wobei die Unterschicht einen höheren Elastizitätsmodul als die Aufzeichnungsschicht aufweist.

Die EP-A-0 582 472 beschreibt einen magnetischen Aufzeichnungsträger, der in einer nicht-magnetischen Unterschicht speziell beschichtete $\alpha$-$Fe_2O_3$ Partikel enthält.

Die JP-A-59 056 221 beschreibt ein magnetisches Aufzeichnungsmedium, das in einer Rückschicht orientierte Whisker-Partikel mit einem Verhältnis von Länge zu Durchmesser von mehr als 50 : 1 enthält.

Die US-A-4,729,922 schlägt zur Verbesserung der abrasiven Eigenschaften magnetischer Aufzeichnungsmaterialien die Verwendung von unmagnetischen $Cr_2O_3$-Partikeln in der Oberschicht vor.

Alle diese Veröffentlichungen ermöglichen nicht die Herstellungen von bandförmigen magnetischen Aufzeichnungsträgern mit befriedigend hohem elastischen Zugspannungsbereich und befriedigend hohem Elastizitätsmodul.

Die EP-A-0 667 607, welche nach Artikel 54 (3) EPÜ als Stand der Technik zu berücksichtigen ist, beschreibt einen magnetischen Aufzeichnungsträger, dessen magnetische Aufzeichnungsschicht orientierte nadelförmige $\gamma$-$Fe_2O_3$-Partikel mit einem Verhältnis von Länge zu Durchmesser von 7,5 : 1 enthält.

Der vorliegenden Erfindung lag daher die Aufgabe zugrunde, den genannten Nachteilen abzuhelfen und einen dauerelastischen bandförmigen magnetischen Aufzeichnungsträger für hohe, zeitlich veränderliche Zugspannungswerte in schnell laufenden Bandlaufwerken zur Verfügung zu stellen.

Demgemäß wurden bandförmige, magnetische Aufzeichnungsträger I mit einer zur magnetischen Informationsspeicherung geeigneten Schicht gefunden, umfassend einen unmagnetischen Träger III, mindestens eine auf diesem Träger aufgetragene Schicht und in mindestens einer dieser Schichten ein als Stützpigment geeignetes anorganisches nadelförmiges Pigment II mit einem Verhältnis der durchschnittlichen Länge zum mittleren durchschnittlichen Durchmesser des Pigments II von mindestens 3 : 1 bis 15 : 1, wobei der mittlere Elastizitätsmodul der genannten Schichten nicht weniger als 15 GPa in Längsrichtung des bandförmigen Aufzeichnungsträgers I beträgt.

Ferner wurden neue, als Stützpigmente geeignete chromhaltige anorganische nadelförmige Pigmente VI und VII, Verfahren zu ihrer Herstellung sowie die Verwendung der Pigmente zur, insbesondere anisotropen, Verstärkung polymerer Massen gefunden.

Unter dem Elastizitätsmodul versteht man erfindungsgemäß das Dehnelastizitäsmodul E, welches sich als das Verhältnis aus der Zugspannung zur Längsdehnung ergibt und in allgemein bekannter Weise leicht ermittelt werden kann.

Als Stützpigment kommen ferromagnetische und nicht-ferromagnetische anorganische nadelförmige Pigmente II in Betracht.

Geeignete ferromagnetische Pigmente II sind metallische Pigmente, wie Fe, Co, Ni und Legierungen dieser Elemente, und oxidische Pigmente, wie $\gamma$-$Fe_2O_3$, Co-haltiges $\gamma$-$Fe_2O_3$, $Fe_3O_4$, vorzugsweise chromhaltige oxidische Pigmente,wie $CrO_2$, und insbesondere solche der Formel VI

$$Cr^aO_x \,.\, n\,H_2O \qquad \text{VI}$$

mit

a: mittlere Wertigkeit des Chroms mit $3,0 < a \leq 3,25$

vorzugsweise mit $3,0 < a \leq 3,1$

x: die sich aus der Chrom-Wertigkeit ergebenden Sauerstoffäquivalente

n: Wassergehalt mit $0 < n < (4-a)/2$.

Die Pigmente VI können dabei erfindungsgemäß aus 50 Gew.-% eines Kerns und 50 Gew.-% einer Hülle aufgebaut sein, wobei die atomaren Verhältnisse zwischen Cr(IV) und Cr(III) in Kern und Hülle gleich oder unterschiedlich sein können.
Geeignete nicht-ferromagnetische Pigmente II sind vorzugsweise oxidische Pigmente,wie FeOOH, $\alpha$-$Fe_2O_3$ und insbesondere chromhaltige Pigmente der Formel VII

$$Cr_2O_3 \cdot n\ H_2O \qquad \text{VII}$$

mit

n: 0 bis 0,5.

Die Pigmente VI und VII sind erhältlich durch Temperung von Pigmenten der Formel VIII

$$CrO_x \qquad \text{VIII}$$

mit

x: $1,8 \leq x \leq 2,2$

bei Temperaturen zwischen 400 und 500°C, vorzugsweise 440 bis 480°C, besonders vorteilhaft 450 bis 470°C, in einem insbesondere molekularen Sauerstoff enthaltenden Gas wie Luft, wodurch sich Reaktionszeiten von 0,5 bis 10, vorzugsweise 0,5 bis 2 Stunden ergeben, wobei die Pigmente VIII vor dem Tempern in an sich bekannter Weise, beispielsweise durch waschen mit wasser, gereinigt werden können.
Vorteilhaft können die Pigmente VIII vor der Temperung mit organischen, vorzugsweise anorganischen Verbindungen, wie Mineralbasen, vorteilhaft Alkalimetallhydroxide, Erdalkalimetallhydroxide und Erdmetallhydroxide, beispielsweise Kaliumhydroxid, Calciumhydroxid, insbesondere Natriumhydroxid, oder deren basischen Salze,beispielsweise Carbonate oder Sulfite, insbesondere Natriumsulfit, behandelt werden. Dabei empfiehlt sich eine Umsetzung in anorganischer, insbesondere wäßriger Lösung bei pH-Werten von 7 bis 14, insbesondere 11 bis 13 ausgenommen Sulfite, für die sich pH-Werte von 7 bis 9 empfehlen, bei Temperaturen von 10 bis 90°C mit Reaktionszeiten von 0,5 bis 10 Stunden, insbesondere 0,5 bis 5 Stunden.
Die Pigmente VI und VII können ebenfalls erhalten werden, indem man zunächst ein Pigment VIII unter hydrothermalen Bedingungen bei Temperaturen von 110°C bis 250°C, vorzugsweise 160°C bis 230°C, insbesondere 190°C bis 210°C,mit einem Reduktionsmittel bei Drükken von 2 bis 500 bar, vorzugsweise 100 bis 300 bar, insbesondere 150 bis 250 bar,innerhalb von 10 bis 500, vorzugsweise 50 bis 250, insbesondere 80 bis 120, Stunden umsetzt. Als Reduktionsmittel kommen anorganische, vorzugsweise organische Verbindungen, wie Carbonsäuren, insbesondere Oxalsäure, in Betracht.
Die Umsetzungsprodukte können in der Reaktionsmischung weiterverarbeitet oder vorteilhaft nach bekannten Verfahren, wie Filtration, aus der Suspension isoliert und vorzugsweise gereinigt, beispielsweise nachgewaschen, werden.
Anschließend werden die Umsetzungsprodukte bei Temperaturen zwischen 100 und 500°C, vorzugsweise 200 bis 400°C, in einem insbesondere molekularen Sauerstoff enthaltenden Gas, wie Luft, getempert, wodurch sich Reaktionszeiten von 0,5 bis 10, vorzugsweise 0,5 bis 2, Stunden ergeben.
Die Umsetzungsprodukte können vor der Temperung mit organischen, vorzugsweise anorganischen Verbindungen wie Mineralbasen, vorteilhaft Alkalimetallhydroxide, Erdalkalimetallhydroxide und Erdmetallhydroxide, beispielsweise Kaliumhydroxid, Calciumhydroxid, insbesondere Natriumhydroxid, oder deren basischen Salze beispielsweise Carbonate oder Sulfite, insbesondere Natriumsulfit, behandelt werden. Dabei empfiehlt sich eine Umsetzung in

anorganischer, insbesondere wäßriger Lösung bei pH-Werten von 7 bis 14, insbesondere 11 bis 13 ausgenommen Sulfite, für die sich pH-Werte von 7 bis 9 empfehlen, bei Temperaturen von 10 bis 90°C mit Reaktionszeiten von 0,5 bis 10 Stunden, insbesondere 0,5 bis 5 Stunden.

Die Pigmente VI und vil können mit organischen, vorzugsweise anorganischen Verbindungen wie Mineralbasen, vorteilhaft Alkalimetallhydroxide, Erdalkalimetallhydroxide und Erdmetallhydroxide, beispielsweise Kaliumhydroxid, Calciumhydroxid, insbesondere Natriumhydroxid, oder deren basischen Salze beispielsweise Carbonate oder Sulfite, insbesondere Natriumsulfit, behandelt werden. Dabei empfiehlt sich eine Umsetzung in anorganischer, insbesondere wäßriger Lösung bei pH-Werten von 7 bis 14, insbesondere 11 bis 13 ausgenommen Sulfite, für die sich pH-Werte von 7 bis 9 empfehlen, bei Temperaturen von 10 bis 90°C mit Reaktionszeiten von 0,5 bis 10 Stunden, insbesondere 0,5 bis 5 Stunden.

Die Stützpigmente II, VI und VII können, wie allgemein bekannt ist, weitere chemische Elemente oder Verbindungen enthalten. Die nadelförmigen Pigmente II, VI und VII weisen erfindungsgemäß ein Verhältnis der durchschnittlichen Länge der Nadeln zum mittleren durchschnittlichen Durchmesser der Nadeln von 3:1 bis 15:1, vorzugsweise 5:1 bis 10:1 und eine Länge von 50 bis 400, vorzugsweise 90 bis 300 nm, insbesondere 100 bis 200 nm auf. Die spezifische Oberfläche nach DIN 66132 der Pigmente VI und VII sollte 30 bis 150, vorzugsweise 50 bis 100 $m^2/g$ betragen. Die Sättigungsmagnetisierung der Pigmente VI beträgt erfindungsgemäß 0,1 bis 65, vorzugsweise 0,1 bis 40, insbesondere 0,1 bis 22 $nTm^3/g$ und die Remanenz 0,05 bis 24, vorzugsweise 0,05 bis 12, insbesondere 0,05 bis 5 $nTm^3/g$.

Die Pigmente II, vorzugsweise VI und VII, eignen sich zur insbesondere anisotropen Verstärkung polymerer Massen. Solche polymere Hassen können vorteilhaft zur Beschichtung von Flächen, beispielsweise Folien, oder dreidimensionalen Körpern wie Zylindern, beispielsweise Drähten, verwendet werden.

Zur Herstellung derart verstärkter polymerer Massen oder Schichten arbeitet man Pigmente II, insbesondere VI oder VII, erfindungsgemäß in Schmelzen oder Lösungen polymerer Massen oder Schmelzen oder Lösungen von Verbindungen, aus denen man polymere Massen herstellen kann, ein und härtet anschließend die Mischungen aus oder läßt sie erstarren.

Zur anisotropen Verstärkung polymerer Massen, wie sie besonders vorteilhaft bei den erfindungsgemäßen magnetischen Aufzeichnungsträgern I angewandt werden kann, kann man die Stützpigmente II, insbesondere VI oder VII, vor dem Aushärten oder Erstarren der polymeren Massen orientieren.

Im Falle von nicht-ferromagnetischen Stützpigmenten kann diese Ausrichtung beispielsweise durch rheologische Maßnahmen, wie Gießen der Mischung durch einen engen Spalt, erreicht werden. Bei ferromagnetischen Stutzpigmenten II, insbesondere VI, kann eine Ausrichtung vorteilhaft mittels eines äußeren Magnetfeldes erfolgen.

In besonders vorteilhaften magnetischen Aufzeichnungsträgern, bei denen sich eine ein ferromagnetisches Stützpigment II enthaltende Schicht V zwischen einem Träger III und einer für die Informationsspeicherung geeigneten Schicht IV befindet, sollte der Richtfaktor in der Schicht V mindestens 2,5 und in der Schicht IV mindestens 4,0 betragen. Unter dem Richtfaktor wird dabei der Quotient aus der Remanenz des bandförmigen magnetischen Aufzeichnungsträgers in Laufrichtung durch die Remanenz des magnetischen Aufzeichnungsträgers senkrecht zu dieser Richtung verstanden. Die Orientierung der Pigmente II, vorzugsweise VI und VII, kann dabei an Ultradünnschnitten bestimmt werden. Dazu werden Ultradünnschnitte mit einer Stärke von 0,1 bis 0,2 µm mit einem Transmissionselektronenmikroskop bei mindestens 20.000 facher Vergrößerung betrachtet. In einem Meßfeld von ca. 20 µm Breite werden je Ultradünnschnitt 50 bis 100 nadelförmige Pigmente statistisch ausgewählt und der mittlere durchschnittliche Durchmesser in Längsrichtung des Bandes ($d_L$) und in Querrichtung ($d_Q$) bestimmt. Die Pigmente gelten für den Fall

$$d_L \geq 2 \cdot d_Q$$

als überwiegend in Längsrichtung des Bandes orientiert.

Bandförmige magnetische Aufzeichnungsträger I enthalten bekanntermaßen einen unmagnetischen Träger III und mindestens eine für die magnetische Informationsspeicherung geeignete Schicht (Magnetschicht) IV.

Die erfindungsgemäßen magnetischen Aufzeichnungsträger I können die beschriebenen Stützpigmente II in dem unmagnetischen Träger III, in mindestens einer der für die Informationsspeicherung geeigneten Schichten IV oder in mindestens einer Schicht V enthalten. Die Schicht V kann dabei zwischen dem Träger III und einer Magnetschicht IV oder auf der einer Magnetschicht IV abgewandten Seite des Trägers III angeordnet sein.

Als unmagnetische Träger III lassen sich die üblichen starren oder flexiblen Trägermaterialien verwenden, insbesondere Folien aus linearen Polyestern wie Polyethylenterephthalat, die im allgemeinen Stärken von 4 bis 200 µm und insbesondere 6 bis 36 µm haben.

Die Magnetschicht IV der erfindungsgemäßen magnetischen Aufzeichnungsträger I kann sowohl auf aufgedampften oder gesputterten, metallischen Dünnfilmen, die im wesentlichen ferromagnetische Elemente, wie Fe, Co und Ni oder ihren Legierungen enthalten, oder auf ferromagnetischen Pigmenten basieren.

Zur Herstellung solcher Schichten können die Pigmente gegebenenfalls mit Füllstoffen in an sich bekannter Weise in einer Lösung aus einem Lösungsmittel, einem Bindemittel und weiteren Zusatzstoffen, wie einem Gleitmittel und einem Dispergiermittel, dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittel und, falls erforderlich, Aushärten des Bindemittels mit anschließendem Kalandrieren.

Als magnetische Pigmente kommen die üblichen oxidischen Pigmente, wie $\gamma$-$Fe_2O_3$, $Fe_3O_4$, und $CrO_2$, oder metallische Pigmente, wie Fe, Co und Ni,in Betracht. Diese Pigmente können, wie allgemein bekannt ist, weitere chemische Elemente oder Verbindungen enthalten.

Als Lösungsmittel können wie üblich Wasser, Ether, wie Tetrahydrofuran oder Dioxan, Ketone,wie Hethylethylketon oder Cyclohexanon, Ester,wie Ethylacetat oder Kohlenwasserstoffe, wie Alkane oder Aromaten,oder Mischungen dieser Lösungsmittel eingesetzt werden.

Als Bindemittel kommen bekanntermaßen Polyacrylate, Polymethacrylate, Polyacrylamid, Vinylpolymere, wie Polystyrol, Polyvinylchlorid, Polyvinylacetat, Polyvinylpropionat oder Polyacrylnitril, cellulosehaltige Bindemittel, wie Celluloseester, insbesondere Cellulosenitrate, Celluloseacetat, Cellulosetriacetat, Celluloseacetopropionat oder Celluloseacetobutyrat, Phenoxyharze, Epoxyharze oder vorzugsweise Polyurethane sowie Block- oder Copolymerisate dieser Verbindungen in Betracht. Geeignete Polyurethane sind beispielsweise in DE-B 11 06 959, DE-B 27 53 694, DE-A 32 26 995, DE-A 32 27 163 und DE-A 32 27 164 beschrieben. Die Polyurethane können als alleinige Bindemittel oder vorzugsweise mit anderen Polymeren, wie Polyvinylformale, Phenoxyharzen, PVC oder PVC-Copolymerisate, verwendet werden.

Die Abriebfestigkeit und der Elastizitätsmodul der Polyurethane und Polyurethangemische können durch Vernetzung dieser Komponenten mit mehrwertigen Isocyanaten, insbesondere solchen mit mehr als 2 Isocyanatgruppen, weiter erhöht werden. Solche Vernetzer können vorteilhaft durch Addition von zweiwertigen Isocyanaten wie Toluylendiisocyanat, Hexamethylendiisocyanat oder Isophorondiisocyanat der Formel

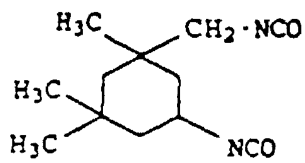

an mehrwertige Alkohole oder durch Biuret- oder Isocyanuratbildung erhalten werden. Als Vernetzer kommt dabei besonders ein Additionsprodukt von Toluylendiisocyanat an Trimethylolpropan und Diethylenglycol in Betracht. Die im Verhältnis zur eingesetzten Menge an Polyurethan zur Erzielung optimaler anwendungstechnischer Eigenschaften erforderliche Menge an Vernetzer kann dabei in einigen einfachen Vorversuchen leicht ermittelt werden.

Als Gleitmittel finden üblicherweise Carbonsäuren mit 10 bis 20 Kohlenstoffatomen, insbesondere Stearinsäure und Palmitinsäure, Derivate von Carbonsäuren, wie deren Salze, Ester und Amide oder fluorierte Kohlenwasserstoffe Anwendung.

Als Dispergiermittel können in üblicher Weise kationische, nichtionische oder vorzugsweise anionische Tenside verwendet werden, wie Carboxylate, Sulfonate, Phosphonate oder Phosphate von Kohlenwasserstoffen, insbesondere Alkyl- oder Arylverbindungen.

Als Füllstoffe kommen bekanntermaßen anorganische und organische Pigmente in Betracht, z.B. Aluminiumoxid, Siliziumdioxid, Ruß, Polyethylen und Polypropylen.

Bei der Herstellung magnetischer Aufzeichnungsträger I können mehrere Magnetschichten IV, von denen mindestens eine Schicht ein Stützpigment II enthält, oder mehrere Schichten V, von denen mindestens eine Schicht ein Stützpigment II enthält, auf das Trägermaterial III aufgebracht werden.

Beispiele

Herstellung eines $CrO_2$-Pigmentes

Beispiel 1

In 159 g Wasser wurden innerhalb von 10 Minuten 554 g $CrO_3$ dispergiert. Zu der Mischung wurden bei 40-60°C 70g Kaliumantimonyltartrat (KAT) langsam zugegeben und 5 Minuten bei 60°C nachgerührt. Anschließend wurden bei 20-30°C innerbalb von 3 Minuten unter Rühren 170 g $Cr_2O_3$ zugegeben.

Dann wurde 15 Minuten unter intensivem Rühren homogenisiert, wobei die Temperatur auf 80°C stieg.
Nach dem Abkühlen auf 30°C wurde das Gemisch in einem Autoklaven in 3 Stunden auf 320-350°C aufgeheizt und 9 Stunden bei dieser Temperatur gehalten, wobei der Druck maximal 360 bar betrug. Anschließend wurde die Mischung abgekühlt, wobei bei Autoklav bei einer Temperatur der Mischung von 200°C entspannt wurde.
Das Produkt wurde dann bei 50°C getrocknet und gemahlen.
Die Eigenschaften sind aus Tabelle 1 ersichtlich.

Beispiel 2a-g

In einer Mischung von 780 g Oxalsäure in 1490 g Wasser wurden 1000 g des Produktes aus Beispiel 1 unter Rühren bei 25°C suspendiert. Anschließend wurde das Gemisch in einem Autoklaven 96 Stunden bei 210°C unter dem sich einstellenden Eigendruck der Mischung gehalten.
Anschließend wurde das Produkt unter den in Tabelle 2 genannten Verfahrensbedingungen in Luft getempert.
Die Eigenschaften sind aus Tabelle 2 ersichtlich.

Beispiel 3

100 g des Produktes aus Beispiel 1 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 μs betrug, und dann der Rückstand in 1000 g Wasser dispergiert.
Dann wurde zu dem Gemisch eine Lösung von 11 g Natriumsulfit in 50 g Wasser gegeben und 30 Minuten bei 20 bis 28°C gerührt.
Das Produkt wurde anschließend abfiltriert und der Filterkuchen solange gewaschen, bis das waschwasser eine Leitfähigkeit bei 20°C < 50 μS zeigte,
**[0141]** Der Filterkuchen wurde bei 50°C getrocknet und auf eine Pelletgröße < 1 mm granuliert.
Die Eigenschaften sind aus Tabelle 1 ersichtlich.

Beispiel 4

100 g des Produktes aus Beispiel 1 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 μS betrug, und dann der Rückstand in 1000 g Wasser dispergiert.
Dann wurde mit 15 Gew.-%iger wäßriger Natronlauge ein pH-Wert von 12 eingestellt und 2 Stunden bei 55°C und pH 12 nachgerührt.
Das Produkt wurde anschließend abfiltriert und der Filterkuchen solange gewaschen, bis das Waschwasser eine Leitfähigkeit bei 20°C < 50 μS zeigte.
Der Filterkuchen wurde bei 50°C getrocknet und auf eine Pelletgröße < 1 mm granuliert.
Die Eigenschaften sind aus Tabelle 1 ersichtlich.

Beispiel 5

100 g des Produktes aus Beispiel 1 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 pS betrug, und dann der Rückstand in 1000 g Wasser dispergiert.
Unter Rühren und Stickstoffabdeckung wurde die Mischung auf 85°C aufgeheizt, bei 85°C eine Lösung von 20 g Natriumsulfit in 100 g Wasser zugegeben und 2 Stunden bei 85°C nachgerührt.
Das Produkt wurde anschließend abfiltriert und der Filterkuchen solange gewaschen, bis das Waschwasser eine Leitfähigkeit bei 20°C < 50 μS zeigte.
Der Filterkuchen wurde bei 50°C getrocknet und auf eine Pelletgröße < 1 mm granuliert.
Die Eigenschaften sind aus Tabelle 1 ersichtlich.

Beispiel 6

100 g des Produktes aus Beispiel 1 wurden in 1000 g Wasser dispergiert und naßgemahlen. Anschließend wurde die Mischung abfiltiert und der Filterkuchen mit Wasser solange gewaschen, bis die Leitfähigkeit des Waschwassers bei 20°C < 50 μS betrug, bei 50°C getrocknet und auf eine Pelletgröße < 1 mm granuliert.
Das Produkt wurde im Drehrohrofen bei einer Verweilzeit von 30 Minuten bei 460°C unter Luftatmosphäre getempert.

Die Eigenschaften sind aus Tabelle 1 ersichtlich.

Beispiel 7

100 g des Produktes aus Beispiel 6 wurden in 1000 g Wasser dispergiert und naßgemahlen. Anschließend wurde die Mischung abfiltiert, der Filterkuchen mit Wasser solange gewaschen, bis die Leitfähigkeit des Waschwassers bei 20°C < 50 µS betrug, und dann der Rückstand in 1000 g Wasser dispergiert.

Dann wurde mit 15 Gew.-%iger wäßriger Natronlauge ein pH-Wert von 12 eingestellt und 2 Stunden bei 55°C und pH 12 nachgerührt.

Das Produkt wurde anschließend abfiltriert und der Filterkuchen solange gewaschen, bis das Waschwasser eine Leitfähigkeit bei 20°C < 50 µS zeigte.

Der Filterkuchen wurde bei 50°C getrocknet und auf eine Pelletgröße < 1 mm granuliert.

Die Eigenschaften sind aus Tabelle 1 ersichtlich.

Herstellung eines magnetischen Aufzeichnungsträgers

Beispiel 8

Auf einen 14 µm dicken unmagnetischen Schichtträger aus Polyethylenterephthalat wurde eine erste Dispersion aus 1000 Gewichtsteilen Chromoxid-Pigment gemäß Beispiel 5, 75 Gewichtsteilen eines Vinylpolymeren mit polaren Ankergruppen, 95 Gewichtsteilen eines Polyurethans mit polaren Ankergruppen, 25 Gewichtsteilen Stearinsäure, 180 Gewichtsteilen Tetrahydrofuran und 180 Gewichtsteilen Dioxan in einer Schichtdicke von 1,2 µm aufgetragen. Auf diese Schicht wurde eine zweite Dispersion aus 1000 Gewichtsteilen eines ferromagnetischen Metallpigmentes mit einer Koezitivkraft von 133 kA/m und einer spezifischen Oberfläche von 52 $m^2/g$, 80 Gewichtsteilen $\alpha$-$Al_2O_3$ mit einer Teilchengröße von 0,2 µm, 77 Gewichtsteilen eines Vinylpolymeren mit polaren Ankergruppen, 77 Gewichtsteilen eines Polyurethans mit polaren Ankergruppen, 10 Gewichtsteilen eines Phosphorsäureesters, 25 Gewichtsteilen Stearinsäure, 22,5 Gewichtsteilen eines Polyisocyanats, 1837,5 Gewichtsteilen Tetrahydrofuran und 1837,5 Gewichtsteilen Dioxan in einer Schichtdicke von 0,4 µm aufgetragen, mit einem magnetischen Richtfeld orientiert, getrocknet und kalandriert.

Es wurde ein erfindungsgemäßer magnetischer Aufzeichnungsträger mit sehr guten magnetischen und mechanischen Eigenschaften erhalten.

Beispiel 9

Es wurde wie in Beispiel 8 verfahren, jedoch enthielt die erste Dispersion anstelle der 1000 Gewichtsteile Chromoxid-Pigment nach Beispiel 5 1000 Gewichtsteile Chromoxid-Pigment nach Beispiel 7.

Es wurde ein erfindungsgemäßer magnetischer Aufzeichnungsträger mit hervorragenden magnetischen und mechanischen Eigenschaften erhalten.

Beispiel 10

Es wurde wie in Beispiel 8 verfahren, jedoch enthielt die erste Dispersion anstelle der 1000 Gewichtsteile Chromoxid-Pigment 1000 Gewichtsteile $\alpha$-$Fe_2O_3$-Pigmente mit einer durchschnittlichen Nadellänge von 125 nm und einem mittleren durchschnittlichen Nadeldurchmesser von 25 nm.

Es wurde ein erfindungsgemäßer magnetischer Aufzeichnungsträger mit guten magnetischen und mechanischen Eigenschaften erhalten.

Vergleichsbeispiel

Es wurde wie in Beispiel 8 verfahren, jedoch enthielt die erste Dispersion anstelle der 1000 Gewichtsteile Chromoxid-Pigment 1000 Gewichtsteile $TiO_2$-Pigment mit einer durchschnittlichen Länge von 60 nm und einem mittleren durchschnittlichen Durchmesser von 30 nm.

Die Schichten des magnetischen Aufzeichungsträgers wiesen einen Elastizitätsmodul von 13 GPa auf.

Tabelle 1

| | Bsp. 1 | Bsp. 3 | Bsp. 4 | Bsp. 5 | Bsp. 6 | Bsp. 7 |
|---|---|---|---|---|---|---|
| Länge [nm] | 130 | 130 | 130 | 130 | 130 | 130 |
| Länge/Dicke | 7 | 7 | 7 | 7 | 7 | 7 |
| SSA [$m^2/g$] | 73 | 73 | 73 | 73 | 64 | 64 |
| Hc [kA/m] | 15 | 15 | 16 | 15 | 0 | 0 |
| $\sigma_r$ [$nTm^3/g$] | 21 | 16 | 17 | 13 | 1 | 1 |
| $\sigma_m$ [$nTm^3/g$] | 77 | 59 | 64 | 49 | 6 | 5 |

Tabelle 2

| Beispiel | Temperung | Hc [kA/m] | $\sigma_r$ [$nTm^3/g$] | $\sigma_m$ [$nTm^3/g$] | SSA [$m^2/g$] |
|---|---|---|---|---|---|
| 2a | ungetempert | 0 | 0 | 1 | 76 |
| 2b | 1h/250°C | 7 | 1 | 5 | 74,6 |
| 2c | 1h/300°C | 17 | 3 | 14 | 73,6 |
| 2d | 1h/350°C | 19 | 11 | 39 | 71,2 |
| 2e | 1h/400°C | 10 | 7 | 33 | 71,5 |
| 2f | 1h/450°C | 3,3 | 2 | 18 | 68,8 |
| 2g | 1h/500°C | 6,2 | ≤1 | 7 | 62,8 |

**Patentansprüche**

**Patentansprüche für folgende Vertragsstaaten : DE, FR, GB**

**1.** Bandförmige, magnetische Aufzeichnungsträger mit einer zur magnetischen Informationsspeicherung geeigneten Schicht, umfassend einen unmagnetischen Träger, mindestens eine auf diesem Träger aufgetragene Schicht und in mindestens einer dieser Schichten ein als Stützpigment geeignetes anorganisches nadelförmiges Pigment mit einem Verhältnis der durchschnittlichen Länge zum mittleren durchschnittlichen Durchmesser des Stützpigments von mindestens 3:1 bis 15:1, wobei der mittlere Elastizitätsmodul der genannten Schichten nicht weniger als 15 GPa in Längsrichtung des bandförmigen Aufzeichnungsträgers beträgt, wobei, wenn das Stützpigment in der zur Informationsspeicherung geeigneten Schicht enthalten ist, kein $\gamma$-$Fe_2O_3$ als Stützpigment verwendet wird.

**2.** Bandförmige, magnetische Aufzeichnungsträger nach Anspruch 1 mit einem Elastizitätsmodul in Längsrichtung des bandförmigen Aufzeichnungsträgers von nicht weniger als 20 GPa.

**3.** Aufzeichnungsträger nach Anspruch 1 oder 2, umfassend

a) einen unmagnetischen Träger und
b) eine zur magnetischen Informationsspeicherung geeignete Schicht.

**4.** Aufzeichnungsträger nach den Ansprüchen 1 bis 3, umfassend eine weitere Schicht, welche ein Bindemittel und das Stützpigment enthält.

**5.** Aufzeichnungsträger nach den Ansprüchen 1 bis 4, wobei der unmagnetische Träger oder die zur magnetischen Informationsspeicherung geeignete Schicht das Stützpigment enthält.

**6.** Aufzeichnungsträger nach Anspruch 3, wobei eine weitere Schicht zwischen dem unmagnetischen Träger und der zur magnetischen Informationsspeicherung geeigneten Schicht oder der unmagnetische Träger zwischen einer weiteren Schicht und der zur magnetischen Informationsspeicherung geeigneten Schicht angeordnet ist.

7. Aufzeichnungsträger nach den Ansprüchen 1 bis 6, enthaltend ein ferromagnetisches Pigment als Stützpigment.

8. Aufzeichnungsträger nach Anspruch 7, enthaltend ferromagnetische Metall- oder Legierungspigmente oder ferromagnetische Metalloxid-Pigmente als Stützpigment.

9. Aufzeichnungsträger nach Anspruch 8, enthaltend Co-haltige $\gamma$-$Fe_2O_3$- $Fe_3O_4$ oder $CrO_2$-Pigmente als Stützpigment.

10. Aufzeichnungsträger nach Anspruch 8, enthaltend als Stützpigment nadelförmige chromhaltige Pigmente der Formel VI

$$Cr^aO_x \cdot n\,H_2O \qquad \text{VI}$$

mit

a: mittlere Wertigkeit des Chroms mit $3{,}0 < a \leq 3{,}25$

x: die sich aus der Chrom-Wertigkeit ergebenden Sauerstoffäquivalente

n: Wassergehalt mit $0 < n < (4\text{-}a)/2$

mit einem Verhältnis der durchschnittlichen Länge der Nadeln zum durchschnittlichen mittleren Durchmesser der Nadeln von 3:1 bis 10:1.

11. Aufzeichnungsträger nach Anspruch 10, wobei die Pigmente VI aus

a) 50 Gew.-% eines Kern und
b) 50 Gew.-% einer Hülle bestehen und

die atomaren Verhältnisse von Cr(IV) zu Cr(III) im Kern und in der Hülle gleich sind.

12. Aufzeichnungsträger nach Anspruch 10, wobei die Pigmente VI aus

a) 50 Gew.-% eines Kerns und
b) 50 Gew.-% einer Hülle bestehen und

das atomare Verhältnis von Cr(IV) zu Cr(III) in der Hülle größer oder kleiner ist als im Kern.

13. Aufzeichnungsträger nach den Ansprüchen 1 bis 6, enthaltend ein nicht-ferromagnetisches Pigment als Stützpigment.

14. Aufzeichnungsträger nach Anspruch 13, enthaltend FeOOH oder $\alpha$-$Fe_2O_3$ als Stützpigment.

15. Aufzeichnungsträger nach Anspruch 13, enthaltend als Stützpigment ein Pigment der Formel VII

$$Cr_2O_3 \cdot n\,H_2O \qquad \text{VII}$$

mit

n: 0 bis 0,5

mit einem Verhältnis der durchschnittlichen Länge der Nadeln zum durchschnittlichen mittleren Durchmesser der Nadeln von 3:1 bis 10:1.

16. Aufzeichnungsträger nach den Ansprüchen 9 bis 12 und 15, enthaltend

a) einen unmagnetischen Träger, darauf angeordnet

b) eine weitere Schicht, die ein Bindemittel und ein chromhaltiges nadelförmiges Metalloxid mit einem Verhältnis der durchschnittlichen Länge zum mittleren durchschnittlichen Durchmesser des Pigments von mindestens 7 und einem Richtfaktor von mindestens 4 und darauf angeordnet

c) eine zur Informationsspeicherung geeignete Schicht, enthaltend ein Bindemittel und ferromagnetische metallische Pigmente,

wobei der Elastizitätsmodul in Längsrichtung des bandförmigen Aufzeichnungsträgers größer als 30 GPa ist.

**17.** Aufzeichnungsträger nach einem der Ansprüche 10 bis 12 enthaltend Pigmente VI, ausgerichtet in einem äußeren Magnetfeld.

**Patentansprüche für folgende Vertragsstaaten : IE, IT, LU, NL, PT, SE**

**1.** Bandförmige, magnetische Aufzeichnungsträger mit einer zur magnetischen Informationsspeicherung geigneten Schicht, umfassend einen unmagnetischen Träger, mindestens eine auf diesem Träger aufgetragene Schicht und in mindestens einer dieser Schichten ein als Stützpigment geeignetes anorganisches nadelförmiges Pigment mit einem Verhältnis der durchschnittlichen Länge zum mittleren durchschnittlichen Durchmesser des Stützpigments von mindestens 3:1 bis 15:1, wobei der mittlere Elastizitätsmodul der genannten Schichten nicht weniger als 15 GPa in Längsrichtung des bandförmigen Aufzeichnungsträgers beträgt.

**2.** Bandförmige, magnetische Aufzeichnungsträger nach Anspruch 1 mit einem Elastizitätsmodul in Längsrichtung des bandförmigen Aufzeichnungsträgers von nicht weniger als 20 GPa.

**3.** Aufzeichnungsträger nach Anspruch 1 oder 2, umfassend

a) einen unmagnetischen Träger und
b) eine zur magnetischen Informationsspeicherung geeignete Schicht.

**4.** Aufzeichnungsträger nach den Ansprüchen 1 bis 3, umfassend eine weitere Schicht, welche ein Bindemittel und das Stützpigment enthält.

**5.** Aufzeichnungsträger nach den Ansprüchen 1 bis 4, wobei der unmagnetische Träger oder die zur magnetischen Informationsspeicherung geeignete Schicht das Stützpigment enthält.

**6.** Aufzeichnungsträger nach Anspruch 3, wobei eine weitere Schicht zwischen dem unmagnetischen Träger und der zur magnetischen Informationsspeicherung geeigneten Schicht oder der unmagnetische Träger zwischen einer weiteren Schicht und der zur magnetischen Informationsspeicherung geeigneten Schicht angeordnet ist.

**7.** Aufzeichnungsträger nach den Ansprüchen 1 bis 6, enthaltend ein ferromagnetisches Pigment als Stützpigment.

**8.** Aufzeichnungsträger nach Anspruch 7, enthaltend ferromagnetische Metall- oder Legierungspigmente oder ferromagnetische Metalloxid-Pigmente als Stützpigment.

**9.** Aufzeichnungsträger nach Anspruch 8, enthaltend $\gamma$-$Fe_2O_3$-, Co-haltige $\gamma$-$Fe_2O_3$-, $Fe_3O_4$- oder $CrO_2$-Pigmente als Stützpigment.

**10.** Aufzeichnungsträger nach Anspruch 8, enthaltend als Stützpigment nadelförmige chromhaltige Pigmente der Formel VI

$$Cr^{a}O_{x} \cdot n\, H_2O \qquad \text{VI}$$

mit

a: mittlere Wertigkeit des Chroms mit $3{,}0 < a \leq 3{,}25$

x: die sich aus der Chrom-Wertigkeit ergebenden Sauerstoffäquivalente

n: Wassergehalt mit $0 < n < (4-a)/2$

mit einem Verhältnis der durchschnittlichen Länge der Nadeln zum durchschnittlichen mittleren Durchmesser der Nadeln von 3:1 bis 10:1.

**11.** Aufzeichnungsträger nach Anspruch 10, wobei die Pigmente VI aus

a) 50 Gew.-% eines Kern und
b) 50 Gew.-% einer Hülle bestehen und

die atomaren Verhältnisse von Cr(IV) zu Cr(III) im Kern und in der Hülle gleich sind.

**12.** Aufzeichnungsträger nach Anspruch 10, wobei die Pigmente VI aus

a) 50 Gew.-% eines Kerns und
b) 50 Gew.-% einer Hülle bestehen und

das atomare Verhältnis von Cr(IV) zu Cr(III) in der Hülle größer oder kleiner ist als im Kern.

**13.** Aufzeichnungsträger nach den Ansprüchen 1 bis 6, enthaltend ein nicht-ferromagnetisches Pigment als Stützpigment.

**14.** Aufzeichnungsträger nach Anspruch 13, enthaltend FeOOH oder $\alpha$-$Fe_2O_3$ als Stützpigment.

**15.** Aufzeichnungsträger nach Anspruch 13, enthaltend als Stützpigment ein Pigment der Formel VII

$$Cr_2O_3 \cdot n\, H_2O \qquad \text{VII}$$

mit

n: 0 bis 0,5

mit einem Verhältnis der durchschnittlichen Länge der Nadeln zum durchschnittlichen mittleren Durchmesser der Nadeln von 3:1 bis 10:1.

**16.** Aufzeichnungsträger nach den Ansprüchen 9 bis 12 und 15, enthaltend

a) einen unmagnetischen Träger, darauf angeordnet

b) eine weitere Schicht, die ein Bindemittel und ein chromhaltiges nadelförmiges Metalloxid mit einem Verhältnis der durchschnittlichen Länge zum mittleren durchschnittlichen Durchmesser des Pigments von mindestens 7 und einem Richtfaktor von mindestens 4 und darauf angeordnet

c) eine zur Informationsspeicherung geeignete Schicht, enthaltend ein Bindemittel und ferromagnetische metallische Pigmente,

wobei der Elastizitätsmodul in Längsrichtung des bandförmigen Aufzeichnungsträgers größer als 30 GPa ist.

**17.** Aufzeichnungsträger nach einem der Ansprüche 10 bis 12 enthaltend Pigmente VI, ausgerichtet in einem äußeren Magnetfeld.

## Claims

### Claims for the following Contracting States : DE, FR, GB

**1.** A tape-like, magnetic recording medium having a layer suitable for magnetic information storage, comprising a nonmagnetic substrate, at least one layer applied to this substrate and, in at least one of these layers, an inorganic acicular pigment suitable as a supporting pigment and having a ratio of the average length to the average of the average diameters of the supporting pigment of from at least 3:1 to 15:1, the average modulus of elasticity of said layers being not less than 15 GPa in the longitudinal direction of the tape-like recording medium, and, if the supporting pigment is contained in the layer suitable for information storage, no $\gamma$-$Fe_2O_3$ being used as the supporting pigment.

**2.** A tape-like, magnetic recording medium as claimed in claim 1, having a modulus of elasticity of not less than 20 GPa in the longitudinal direction of the tape-like recording medium.

**3.** A recording medium as claimed in claim 1 or 2, comprising

a) a nonmagnetic substrate and
b) a layer suitable for magnetic information storage.

**4.** A recording medium as claimed in any of claims 1 to 3, comprising a further layer which contains a binder and the supporting pigment.

**5.** A recording medium as claimed in any of claims 1 to 4, the nonmagnetic substrate or the layer suitable for magnetic information storage containing the supporting pigment.

**6.** A recording medium as claimed in claim 3, a further layer being arranged between the nonmagnetic substrate and the layer suitable for magnetic information storage or the nonmagnetic substrate being arranged between a further layer and the layer suitable for magnetic information storage.

**7.** A recording medium as claimed in any of claims 1 to 6, containing a ferromagnetic pigment as the supporting pigment.

**8.** A recording medium as claimed in claim 7, containing ferromagnetic metal or alloy pigments or ferromagnetic metal oxide pigments as the supporting pigment.

**9.** A recording medium as claimed in claim 8, containing Co-containing $\gamma$-$Fe_2O_3$, $Fe_3O_4$ or $CrO_2$ pigments as the supporting pigment.

**10.** A recording medium as claimed in claim 8, containing, as the supporting pigment, acicular chromium-containing pigments of the formula VI

$$Cr^{a}O_{x} \cdot n\,H_2O \qquad \text{VI}$$

where

a  is the average valency of the chromium, where $3.0 < a \leq 3.25$,
x  is the oxygen equivalents arising from the valency of the chromium and
n  is the water content, where $0 < n < (4-a)/2$,

having a ratio of the average length of the needles to the average of the average diameters of the needles of from 3:1 to 10:1.

**11.** A recording medium as claimed in claim 10, the pigments VI consisting of

a) 50% by weight of a core and
b) 50% by weight of a coat and

the atomic ratios of Cr(IV) to Cr(III) in the core and in the coat being identical.

**12.** A recording medium as claimed in claim 10, the pigments VI consisting of

a) 50% by weight of a core and
b) 50% by weight of a coat and

the atomic ratio of Cr(IV) to Cr(III) in the coat being greater than or less than in the core.

**13.** A recording medium as claimed in any of claims 1 to 6, containing a nonferromagnetic pigment as the supporting pigment.

**14.** A recording medium as claimed in claim 13, containing FeOOH or $\alpha$-$Fe_2O_3$ as the supporting pigment.

**15.** A recording medium as claimed in claim 13, containing, as the supporting pigment, a pigment of the formula VII

$$Cr_2O_3 \cdot n\,H_2O \qquad \text{VII}$$

where

n is from 0 to 0.5,

having a ratio of the average length of the needles to the average of the average diameters of the needles of from 3:1 to 10:1.

**16.** A recording medium as claimed in any of claims 9 to 12 and 15, containing

a) a nonmagnetic substrate and, arranged thereon,
b) a further layer containing a binder and a chromium-containing acicular metal oxide having a ratio of the average length to the average of the average diameters of the pigment of at least 7 and an orientation ratio of at least 4, and, arranged thereon,
c) a layer suitable for information storage and containing a binder and ferromagnetic metallic pigments,

the modulus of elasticity in the longitudinal direction of the tape-like recording medium being greater than 30 GPa.

**17.** A recording medium as claimed in any of claims 10 to 12, containing pigments VI, oriented in an external magnetic field.

**Claims for the following Contracting States : IE, IT, LU, NL, PT, SE**

**1.** A tape-like, magnetic recording medium having a layer suitable for magnetic information storage, comprising a nonmagnetic substrate, at least one layer applied to this substrate and, in at least one of these layers, an inorganic acicular pigment suitable as a supporting pigment and having a ratio of the average length to the average of the average diameters of the supporting pigment of from at least 3:1 to 15:1, the average modulus of elasticity of said layers being not less than 15 GPa in the longitudinal direction of the tape-like recording medium.

**2.** A tape-like, magnetic recording medium as claimed in claim 1, having a modulus of elasticity of not less than 20 GPa in the longitudinal direction of the tape-like recording medium.

**3.** A recording medium as claimed in claim 1 or 2, comprising

a) a nonmagnetic substrate and

b) a layer suitable for magnetic information storage.

**4.** A recording medium as claimed in any of claims 1 to 3, comprising a further layer which contains a binder and the supporting pigment.

**5.** A recording medium as claimed in any of claims 1 to 4, the nonmagnetic substrate or the layer suitable for magnetic information storage containing the supporting pigment.

**6.** A recording medium as claimed in claim 3, a further layer being arranged between the nonmagnetic substrate and the layer suitable for magnetic information storage or the nonmagnetic substrate being arranged between a further layer and the layer suitable for magnetic information storage.

**7.** A recording medium as claimed in any of claims 1 to 6, containing a ferromagnetic pigment as the supporting pigment.

**8.** A recording medium as claimed in claim 7, containing ferromagnetic metal or alloy pigments or ferromagnetic metal oxide pigments as the supporting pigment.

**9.** A recording medium as claimed in claim 8, containing $\gamma$-$Fe_2O_3$, Co-containing $\gamma$-$Fe_2O_3$, $Fe_3O_4$ or $CrO_2$ pigments as the supporting pigment.

**10.** A recording medium as claimed in claim 8, containing, as the supporting pigment, acicular chromium-containing pigments of the formula VI

$$Cr^aO_x \cdot n\ H_2O \qquad \text{VI}$$

where

a is the average valency of the chromium, where $3.0 < a \leq 3.25$,
x is the oxygen equivalents arising from the valency of the chromium and
n is the water content, where $0 < n < (4-a)/2$,

having a ratio of the average length of the needles to the average of the average diameters of the needles of from 3:1 to 10:1.

**11.** A recording medium as claimed in claim 10, the pigments VI consisting of

a) 50% by weight of a core and
b) 50% by weight of a coat and

the atomic ratios of Cr(IV) to Cr(III) in the core and in the coat being identical.

**12.** A recording medium as claimed in claim 10, the pigments VI consisting of

a) 50% by weight of a core and
b) 50% by weight of a coat and

the atomic ratio of Cr(IV) to Cr(III) in the coat being greater than or less than in the core.

**13.** A recording medium as claimed in any of claims 1 to 6, containing a nonferromagnetic pigment as the supporting pigment.

**14.** A recording medium as claimed in claim 13, containing FeOOH or $\alpha$-$Fe_2O_3$ as the supporting pigment.

**15.** A recording medium as claimed in claim 13, containing, as the supporting pigment, a pigment of the formula VII

$$Cr_2O_3 \cdot n\, H_2O \qquad VII$$

where

n is from 0 to 0.5,

having a ratio of the average length of the needles to the average of the average diameters of the needles of from 3:1 to 10:1.

**16.** A recording medium as claimed in any of claims 9 to 12 and 15, containing

a) a nonmagnetic substrate and, arranged thereon,
b) a further layer containing a binder and a chromium-containing acicular metal oxide having a ratio of the average length to the average of the average diameters of the pigment of at least 7 and an orientation ratio of at least 4, and, arranged thereon,
c) a layer suitable for information storage and containing a binder and ferromagnetic metallic pigments,

the modulus of elasticity in the longitudinal direction of the tape-like recording medium being greater than 30 GPa.

**17.** A recording medium as claimed in any of claims 10 to 12, containing pigments VI, oriented in an external magnetic field.

## Revendications

### Revendications pour les Etats contractants suivants : DE, FR, GB

**1.** Support d'enregistrement magnétique en forme de bande, portant une couche convenant à la mémorisation magnétique d'informations, comportant un support amagnétique, au moins une couche appliquée sur ce support, et, au moins dans l'une de ces couches, un pigment aciculaire inorganique pouvant servir de pigment de soutien, présentant un rapport entre la longueur moyenne et le diamètre moyen du pigment de soutien d'au moins 3:1 à 15:1, le module d'élasticité moyen des couches mentionnées n'étant pas inférieur à 15 GPa dans la direction longitudinale du support d'enregistrement en forme de bande, auquel cas il n'est pas fait usage, en tant que pigment de soutien, de $\gamma$-$Fe_2O_3$ quand le pigment de soutien est contenu dans la couche convenant à la mémorisation d'informations.

**2.** Support d'enregistrement magnétique en forme de bande selon la revendication 1, qui a un module d'élasticité dans la direction longitudinale du support d'enregistrement en forme de bande non inférieur à 20 GPa.

**3.** Support d'enregistrement selon la revendication 1 ou 2, qui comprend

a) un support amagnétique, et
b) une couche convenant à la mémorisation magnétique d'informations.

**4.** Support d'enregistrement selon les revendications 1 à 3, qui comporte une couche supplémentaire contenant un liant et le pigment de soutien.

**5.** Support d'enregistrement selon les revendications 1 à 4, dans lequel le pigment de soutien est contenu dans le support amagnétique ou dans la couche convenant à la mémorisation magnétique d'informations.

**6.** Support d'enregistrement selon la revendication 3, dans lequel une couche supplémentaire est disposée entre le support amagnétique et la couche convenant à la mémorisation magnétique d'informations, ou encore le support amagnétique est disposé entre une couche supplémentaire et la couche convenant à la mémorisation magnétique d'informations.

**7.** Support d'enregistrement selon les revendications 1 à 6, qui en tant que pigment de soutien contient un pigment ferromagnétique.

**8.** Support d'enregistrement selon la revendication 7, qui en tant que pigment de soutien contient des pigments ferromagnétiques à base d'un métal ou d'un alliage, ou des pigments ferromagnétiques à base d'un oxyde métallique.

**9.** Support d'enregistrement selon la revendication 8, qui en tant que pigment de soutien contient des pigments de $\gamma$-$Fe_2O_3$ contenant du Co, de $Fe_3O_4$ ou de $CrO_2$.

**10.** Support d'enregistrement selon la revendication 8, qui en tant que pigment de soutien contient des pigments chromés aciculaires de formule VI

$$Cr^{a}O_{x} . n H_2O \qquad \text{VI}$$

dans laquelle

a est la valence moyenne du chrome, avec $3,0 < a \leq 3,25$
x représente les équivalents d'oxygène qui ressortent de la valence du chrome
n est la teneur en eau, avec $0 < n < (4-a)/2$

avec un rapport de 3:1 à 10:1 entre la longueur moyenne des aiguilles et le diamètre moyen des aiguilles.

**11.** Support d'enregistrement selon la revendication 10, dans lequel les pigments VI sont constitués

a) de 50 % en poids d'un coeur, et
b) de 50 % en poids d'une gaine,

et les rapports en atomes de Cr(IV) à Cr(III) sont les mêmes dans le noyau et dans la gaine.

**12.** Support d'enregistrement selon la revendication 10, dans lequel les pigments VI sont constitués

a) de 50 % en poids d'un coeur, et
b) de 50 % en poids d'une gaine, et

le rapport en atomes du Cr(IV) au Cr(III) est, dans la gaine, supérieur ou inférieur à celui qui l'est dans le noyau.

**13.** Support d'enregistrement selon les revendications 1 à 6, qui en tant que pigment de soutien contient un pigment non-ferromagnétique.

**14.** Support d'enregistrement selon la revendication 13, qui en tant que pigment de soutien contient du FeOOH ou de l'$\alpha$-$Fe_2O_3$.

**15.** Support d'enregistrement selon la revendication 13, qui en tant que pigment de soutien contient un pigment de formule VII

$$Cr_2O_3 . n H_2O \qquad \text{VII}$$

dans laquelle
n vaut de 0 à 0,5
avec un rapport de 3:1 à 10:1 entre la longueur moyenne des aiguilles et le diamètre moyen des aiguilles.

**16.** Support d'enregistrement selon les revendications 9 à 12 et 15, qui contient

a) un support amagnétique, sur lequel est disposée

b) une couche supplémentaire, qui contient un liant et un oxyde métallique aciculaire chromé présentant un rapport d'au moins 7 entre la longueur moyenne et le diamètre moyen du pigment, et un facteur d'orientation d'au moins 4, couche sur laquelle est disposée
c) une couche convenant à la mémorisation d'informations, qui contient un liant et des pigments métalliques ferromagnétiques

le module d'élasticité dans la direction longitudinale du support d'enregistrement en forme de bande étant supérieur à 30 GPa.

**17.** Support d'enregistrement selon l'une des revendications 10 à 12, qui contient des pigments VI orientés dans un champ magnétique extérieur.

**Revendications pour les Etats contractants suivants : IE, IT, LU, NL, PT, SE**

**1.** Support d'enregistrement magnétique en forme de bande, portant une couche convenant à la mémorisation magnétique d'informations, comportant un support amagnétique, au moins une couche appliquée sur ce support, et, au moins dans l'une de ces couches, un pigment aciculaire inorganique pouvant servir de pigment de soutien, présentant un rapport entre la longueur moyenne et le diamètre moyen du pigment de soutien d'au moins 3:1 à 15:1, le module d'élasticité moyen des couches mentionnées n'étant pas inférieur à 15 GPa dans la direction longitudinale du support d'enregistrement en forme de bande.

**2.** Support d'enregistrement magnétique en forme de bande selon la revendication 1, qui a un module d'élasticité dans la direction longitudinale du support d'enregistrement en forme de bande non inférieur à 20 GPa.

**3.** Support d'enregistrement selon la revendication 1 ou 2, qui comprend

a) un support amagnétique, et
b) une couche convenant à la mémorisation magnétique d'informations.

**4.** Support d'enregistrement selon les revendications 1 à 3, qui comporte une couche supplémentaire contenant un liant et le pigment de soutien.

**5.** Support d'enregistrement selon les revendications 1 à 4, dans lequel le pigment de soutien est contenu dans le support amagnétique ou dans la couche convenant à la mémorisation magnétique d'informations.

**6.** Support d'enregistrement selon la revendication 3, dans lequel une couche supplémentaire est disposée entre le support amagnétique et la couche convenant à la mémorisation magnétique d'informations, ou encore le support amagnétique est disposé entre une couche supplémentaire et la couche convenant à la mémorisation magnétique d'informations.

**7.** Support d'enregistrement selon les revendications 1 à 6, qui en tant que pigment de soutien contient un pigment ferromagnétique.

**8.** Support d'enregistrement selon la revendication 7, qui en tant que pigment de soutien contient des pigments ferromagnétiques à base d'un métal ou d'un alliage, ou des pigments ferromagnétiques à base d'un oxyde métallique.

**9.** Support d'enregistrement selon la revendication 8, qui en tant que pigment de soutien contient des pigments de $\gamma$-$Fe_2O_3$ contenant du Co, de $Fe_3O_4$ ou de $CrO_2$.

**10.** Support d'enregistrement selon la revendication 8, qui en tant que pigment de soutien contient des pigments chromés aciculaires de formule VI

$$Cr^aO_x \cdot n\,H_2O \qquad \text{VI}$$

dans laquelle

a est la valence moyenne du chrome, avec $3,0 < a \leq 3,25$
x représente les équivalents d'oxygène qui ressortent de la valence du chrome
n est la teneur en eau, avec $0 < n < (4-a)/2$

avec un rapport de 3:1 à 10:1 entre la longueur moyenne des aiguilles et le diamètre moyen des aiguilles.

**11.** Support d'enregistrement selon la revendication 10, dans lequel les pigments VI sont constitués

a) de 50 % en poids d'un coeur, et
b) de 50 % en poids d'une gaine,

et les rapports en atomes de Cr(IV) à Cr(III) sont les mêmes dans le noyau et dans la gaine.

**12.** Support d'enregistrement selon la revendication 10, dans lequel les pigments VI sont constitués

a) de 50 % en poids d'un coeur, et
b) de 50 % en poids d'une gaine, et

le rapport en atomes du Cr(IV) au Cr(III) est, dans la gaine, supérieur ou inférieur à celui qui l'est dans le noyau.

**13.** Support d'enregistrement selon les revendications 1 à 6, qui en tant que pigment de soutien contient un pigment non-ferromagnétique.

**14.** Support d'enregistrement selon la revendication 13, qui en tant que pigment de soutien contient du FeOOH ou de l'$\alpha$-$Fe_2O_3$.

**15.** Support d'enregistrement selon la revendication 13, qui en tant que pigment de soutien contient un pigment de formule VII

$$Cr_2O_3 \cdot n\,H_2O \qquad \text{VII}$$

dans laquelle
n vaut de 0 à 0,5
avec un rapport de 3:1 à 10:1 entre la longueur moyenne des aiguilles et le diamètre moyen des aiguilles.

**16.** Support d'enregistrement selon les revendications 9 à 12 et 15, qui contient

a) un support amagnétique, sur lequel est disposée
b) une couche supplémentaire, qui contient un liant et un oxyde métallique aciculaire chromé présentant un rapport d'au moins 7 entre la longueur moyenne et le diamètre moyen du pigment, et un facteur d'orientation d'au moins 4, couche sur laquelle est disposée
c) une couche convenant à la mémorisation d'informations, qui contient un liant et des pigments métalliques ferromagnétiques

le module d'élasticité dans la direction longitudinale du support d'enregistrement en forme de bande étant supérieur à 30 GPa.

**17.** Support d'enregistrement selon l'une des revendications 10 à 12, qui contient des pigments VI orientés dans un champ magnétique extérieur.